# EUROPÄISCHE PATENTSCHRIFT

(11) **EP 3 097 320 B1**
(45) Veröffentlichungstag und Bekanntmachung des Hinweises auf die Patenterteilung: **08.04.2020**
(21) Anmeldenummer: 15700494.6
(22) Anmeldetag: 19.01.2015
(51) Int. Cl.: F16D 66/02, F16D 55/2265

(54) **SCHEIBENBREMSE FÜR EIN NUTZFAHRZEUG**
DISK BRAKE FOR A UTILITY VEHICLE
FREIN À DISQUE POUR VÉHICULE UTILITAIRE

(30) Priorität: 20.01.2014 DE 102014100560
(43) Veröffentlichungstag der Anmeldung: 30.11.2016
(73) Patentinhaber: KNORR-BREMSE Systeme für Nutzfahrzeuge GmbH, 80809 München (DE)
(72) Erfinder: HUBER, Stefan, 94501 Aldersbach (DE); HIDRINGER, Michael, 94544 Hofkirchen (DE)
(86) Internationale Anmeldenummer: PCT/EP2015/050886
(87) Internationale Veröffentlichungsnummer: WO 2015/107192

(56) Entgegenhaltungen:
- EP-A1- 1 596 092
- WO-A1-2013/011490
- DE-A1-102008 034 653
- US-A- 4 279 214
- US-A- 4 776 438
- US-A1- 2007 012 525
- US-B1- 6 237 723

## Beschreibung

Die Erfindung betrifft eine Scheibenbremse für ein Nutzfahrzeug nach dem Oberbegriff des Anspruchs 1.

Vor allem aus Gründen der Betriebssicherheit einer Scheibenbremse erfolgt eine Überwachung des Verschleißes der Bremsbeläge und/oder der Bremsscheibe, so dass ein erforderlicher Austausch des jeweiligen Bremsbelages zu einem bestmöglichen Zeitpunkt erfolgt. Dabei soll der Verschleißzustand der Bremsbeläge zuvor möglichst genau festgestellt werden.

Insbesondere aus betriebswirtschaftlichen Gründen wird der Austausch der Bremsbeläge zu einem optimalen Zeitpunkt gefordert. Dabei ist anzustreben, dass ein Austausch erst dann vorgenommen wird, wenn der jeweilige Reibbelag bis auf eine zulässige Minimaldicke abgenutzt ist. Ein früherer Austausch würde der Optimierung der diesbezüglichen Betriebskosten entgegenstehen, während ein zu später Austausch eine Beeinträchtigung der Funktionssicherheit der Scheibenbremse insgesamt nach sich ziehen würde.

Zur Erkennung des Verschleißzustandes der Bremsbeläge sind verschiedene konstruktive Lösungen bekannt. So ist eine Verschleißanzeige im Einsatz, bei der durch die Belagträgerplatte ein stromleitendes Kabel geführt wird, das bei Verschleiß des Reibbelages durchtrennt wird und ein Signal in einem Signalgeber zu erkennen gibt, üblicherweise im Fahrerhaus des Kraftfahrzeuges.

Weiter sind Verschleißanzeigen bekannt, die mittels eines Drehpotentiometers eine bei einer Nachstellung der Bremsbeläge zum Ausgleich eines Verschleißhubes sich ergebende Verfahrstrecke einer Nachstelleinrichtung ermitteln, die ebenfalls, z.B. durch den Fahrer des Fahrzeuges, durch eine Anzeigeeinrichtung erkennbar ist.

Zur visuellen Erkennung des Verschleißzustandes der Bremsbeläge, entsprechend der Gattung, kommt beispielsweise eine Einrichtung zum Einsatz, die einen im Bremssattel geführten federbelasteten Stift aufweist, durch den eine verschleißbedingte Verstellung des Bremssattels erkennbar wird.

Allerdings ist die Realisierung einer solchen Verschleißanzeige mit erheblichem baulichem Aufwand verbunden, ebenso wie die der übrigen bekannten Verschleißanzeigen. Beispielsweise ist zur Führung des Stiftes eine aufwändige Bearbeitung des Bremssattels erforderlich.

Die elektrischen Verschleißanzeigen sind ebenfalls nur mit einem erheblichen apparativen Aufwand zu verwirklichen und können überdies, aufgrund des rauen Betriebs, bei dem Nutzfahrzeuge vielfach eingesetzt werden, eine absolut zuverlässige Funktion nicht gewährleisten.

In der DE 36 12 166 C2 wird vorgeschlagen, zur visuellen Erkennung des Verschleißzustandes der Bremsbeläge bzw. der Bremsscheibe den Bremsträger mit einer Markierung zu versehen, die in Korrespondenz mit einer entsprechend modifizierten Belagträgerplatte der Verschleißerkennung dient.

Dabei werden die bremsträgerseitigen Markierungen durch eine entsprechende Formgebung hergestellt, insbesondere durch U- oder V-förmige Ausnehmungen im Sinne von Kerben.

Allerdings haben solche Ausnehmungen, aber auch andere notwendige Formgebungen, Einfluss auf die Festigkeit des Bremsträgers, wobei vor allem die Kerben zu einer Minderung der Dauerbruchfestigkeit führen.

Aus der EP 1 596 092 A1 ist eine Scheibenbremse gemäß der Gattung offenbart, bei der zur Verschleißerkennung ein Vergleichselement in Form eines am Bremsträger befestigten, parallel zu einem Führungsholm verlaufenden Stift besteht, der durch eine Durchgangsbohrung des Bremssattels geführt ist und der mit einem durchmessergrößeren Kopf am Bremsträger gehalten ist, wobei dieser Kopf das Auflager für eine Schraubenfeder bildet, die sich andererseits an einem Schenkel des Bremssattels abstützt. Dabei ist ein über den Bremssattel vorstehender Endbereich des Stiftes derart bemessen, dass bei Erreichen einer Verschleißgrenze der Bremsbeläge die freie Stirnseite des Stiftes bündig mit der Außenseite des Bremssattels abschließt.

Allen Einrichtungen zur Verschleißerkennung gemeinsam ist, dass sie im Wesentlichen nur bei demontiertem Fahrzeugrad erkennbar sind, was einer optimierten Verwendung der Einrichtung entgegensteht.

Der Erfindung liegt die Aufgabe zugrunde, eine Scheibenbremse der gattungsgemäßen Art so weiterzuentwickeln, dass mit geringem konstruktivem und fertigungstechnischem Aufwand eine einfache, zuverlässige und genaue Verschleißanzeige des Bremsbelages möglich ist.

Diese Aufgabe wird durch eine Scheibenbremse mit den Merkmalen des Anspruchs 1 gelöst.

Ein erfindungsgemäß am Bremsträger befestigtes Vergleichselement, das sich parallel zum Führungsholm des Bremsträgers erstreckt und entgegengesetzt zur Bremsscheibe ausgerichtet ist, mit einer Abstufung, ist besonders einfach und kostengünstig herzustellen und zu montieren. Daraus ergibt sich eine signifikante Kostenreduzierung, gegenüber den erwähnten Verschleißkontakten oder einer kontinuierlichen Verschleißsensierung durch den beschriebenen Potentiometer.

Als Abstufung im weitesten Sinn sind alle Verformungen des Vergleichselementes zu sehen, wie Ausklinkungen, Prägungen, Einstiche, Kerben oder dergleichen.

Die Anordnung des Vergleichselementes, entgegengesetzt zur Bremsscheibe verlaufend, erlaubt eine Verschleißerkennung ohne dass das Fahrzeugrad demontiert werden muss.

Die optische Erkennbarkeit des Verschleißzustandes wird unterstützt durch die Abstufung, die in Korrespondenz mit einer Kante des Bremssattels das Erreichen der minimal zulässigen Dicke des Reibbelages erkennen lässt, wobei besagte Kante und die Abstufung visuell fluchten.

Um hier eine optische Unterscheidung herzustellen, d.h. um den Verschleißzustand auch bei ungünstigen Lichtverhältnissen erkennen zu können, kann die Abstufung ebenso wie die Kante des Bremssattels farblich markiert sein.

Da das Vergleichselement als separates Bauteil bereitgestellt wird, ist eine Veränderung des Bremsträgers bzw. anderer Bauteile der Scheibenbremse nicht mehr erforderlich.

Nach einer vorteilhaften Weiterbildung der Erfindung besteht das Vergleichselement aus einem abgewinkelten Blech, das zwischen dem Führungsholm und dem Bremsträger eingeklemmt ist, wozu eine Öse am Vergleichselement angeformt ist, die von dem Schaft einer Schraube durchtreten ist, mit der der Führungsholm am Bremsträger befestigt ist.

Nach einer anderen Variante der Erfindung wird das Vergleichselement zwischen einem Ring eines Faltenbalgs und dem Bremsträger angeordnet, wobei sich der Ring des Faltenbalgs an der Öse abstützt. Der Faltenbalg dient dem Schutz des Führungsholms in dem Bereich, der zwischen dem Bremssattel und dem Bremsträger frei liegt.

Nach einem weiteren Gedanken der Erfindung ist das Vergleichselement als Stift ausgebildet, der in ein Auge des Bremsträgers eingepresst ist und darin reibschlüssig gehalten ist.

In jeder Form, ob als Blechstreifen oder als Stift, ist das Vergleichselement äußerst einfach herzustellen, als Drehteil (Stift) oder Stange/Umformteil (Blechstreifen). Im Gegensatz zu einer elektrischen Verschleißerkennung, wie zum Stand der Technik beschrieben mit einem im Reibbelag eingebetteten Kontaktleiter, verursacht die neue Verschleißerkennung im Betrieb keinen Abrieb, so dass auch aus Umweltschutzgründen die Erfindung entsprechende Vorteile bietet.

Neben der besonders preiswerten Herstellbarkeit ist die im Prinzip universelle Einsetzbarkeit hervorzuheben. Insbesondere ist eine nachträgliche Bestückung einer bereits montierten Scheibenbremse problemlos möglich, wobei das Vergleichselement so ausgebildet ist, dass es sowohl an der einen wie an der anderen Seite im Anschlussbereich des Bremssattels am Bremsträger montierbar ist. In diesem Fall sind zwei Führungsholme vorgesehen, von denen einer Bestandteil eines Festlagers und der andere Bestandteil eines Loslagers ist. Hier bietet sich die Möglichkeit der Klemmung des Vergleichselementes zwischen dem Führungsholm bzw. zwischen dem Faltenbalg und dem Belagträger an.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: einen Teil einer erfindungsgemäßen Scheibenbremse in unterschiedlichen, verschleißbedingten Stellungen
- Figur 2: eine Einzelheit der Scheibenbremse in einer perspektivischen Ansicht
- Figuren 3 und 4: die Einzelheit nach Fig. 2 in montierter Stellung, jeweils ebenfalls perspektivisch gezeigt
- Figur 5: ein weiteres Ausführungsbeispiel einer Einzelheit der Scheibenbremse in schaubildlicher Darstellung
- Figur 6: die Einzelheit nach Fig. 5 in montierter Stellung
- Figur 7: ein weiteres Ausführungsbeispiel der Erfindung als Einzelheit dargestellt.

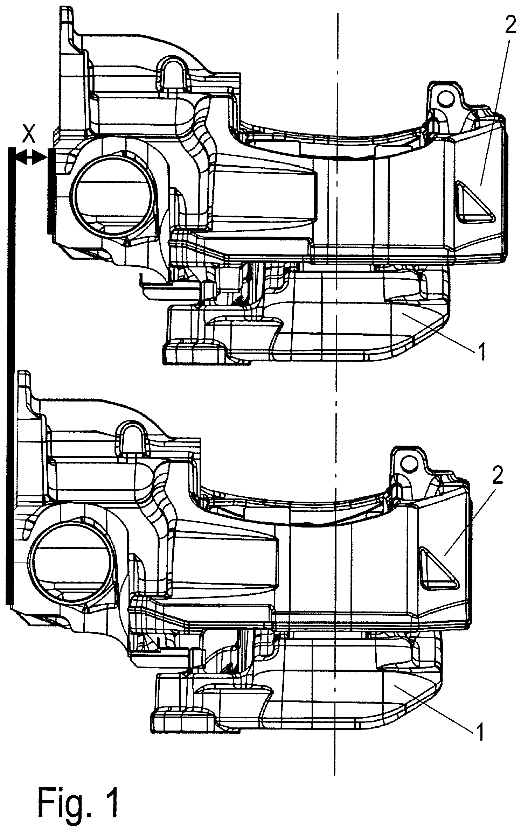

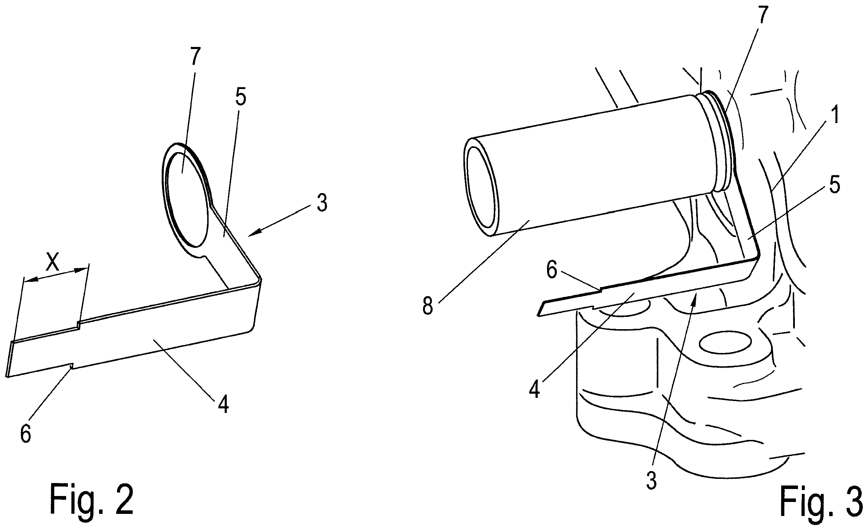

In der Figur 1 ist ein an einem fahrzeugseitigen Bremsträger 1 befestigter Bremssattel 2 einer Scheibenbremse gezeigt, der eine nicht dargestellte Bremsscheibe übergreift. In Bezug auf die Bremsscheibe ist der Bremssattel 2 axial verschiebbar am Bremsträger 1 gehalten, wobei hierzu mit dem Bremsträger 1 verbundene Führungsholme 8 (Fig. 3) vorgesehen sind.

Im Bremssattel 2 bzw. im Bremsträger 1 sind zwei gleichfalls nicht gezeigte Bremsbeläge angeordnet, die bei einer Bremsung mittels einer Zuspanneinrichtung gegen die Bremsscheibe pressbar sind. Jeder Bremsbelag besteht aus einer Belagträgerplatte und einem die Bremsscheibe im Fall einer Bremsung kontaktierenden Reibbelag.

Dieser Reibbelag, aber auch die Bremsscheibe unterliegen einem Verschleiß im Sinne eines Abriebs, durch den sich die Stellung des Bremssattels 2 gegenüber dem Bremsträger 1 verändert. Dieses Verschleißmaß ist in der Figur 1 mit X bezeichnet, wobei die obere Abbildung die Stellung des Bremssattels 2 mit unverschlissenen Bremsbelägen und die untere Abbildung mit bis zu einer Minimaldicke abgeriebenen Bremsbelägen wiedergibt.

Zur Kontrolle des Verschleißes, insbesondere jedoch zur Erkennung einer zulässigen Verschleißgrenze ist eine Verschleißerkennung vorgesehen, die, gemäß der Erfindung aus einem länglichen Vergleichselement 3 besteht, mit mindestens einer Abstufung 6. Ein solches Vergleichselement 3 ist in verschiedenen Ausführungsvarianten in den Figuren 2-7 dargestellt.

Allen gemeinsam ist, dass das Vergleichselement 3 parallel zum Führungsholm 8 verläuft und sich in die zur Bremsscheibe entgegengesetzte Richtung erstreckt.

Die Abstufung 6 ist in einer Entfernung vom freien Ende des Vergleichselements 3 vorgesehen, der dem maximal zulässigen Verschleißmaß X entspricht.

In den Figuren 2-4 ist das Vergleichselement 3 als abgewinkelter Streifen ausgebildet, mit zwei winklig zueinander stehenden Schenkeln 4, 5, wobei sich der Schenkel 4 parallel zum Führungsholm 8 erstreckt, während der Schenkel 5 endseitig eine Öse 7 aufweist zum Durchtritt eines Gewindezapfens, mit dem der Führungsholm 8 am Bremsträger 1 befestigt ist. Somit wird das Vergleichselement 3 zwischen dem Bremsträger 1 und dem Führungsholm 8 eingeklemmt.

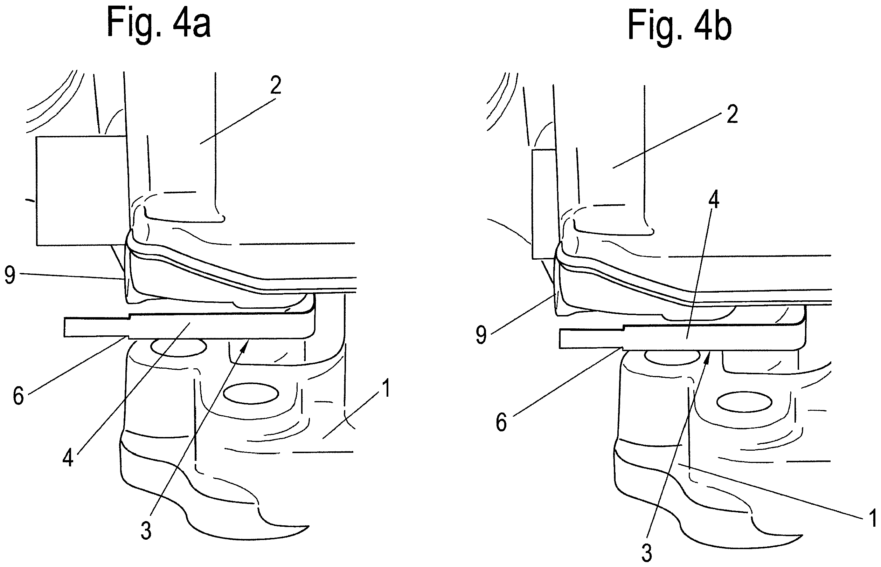

In den Figuren 4a) und 4b) ist das Vergleichselement 3 in Bezug auf die unterschiedlichen Stellungen des Bremssattels 2 vor und nach einer verschleißbedingten Verschiebung erkennbar.

Dabei gibt die Figur 4b) die Position wieder, die der Bremssattel 2 bei Erreichen eines zulässigen Verschleißmaßes der Bremsbeläge einnimmt, in der eine Kante 9 des Bremssattels 2 visuell fluchtet mit dem freien Ende des Schenkels 4.

In der Figur 4a) ist die Position des Bremssattels 2 wiedergegeben, in der die Bremsbeläge noch nicht im Sinne eines Abriebs beansprucht sind. Dabei fluchtet die Kante 9 mit der Abstufung 6, was für einen Beobachter von außen her ohne weiteres und deutlich zu erkennen ist.

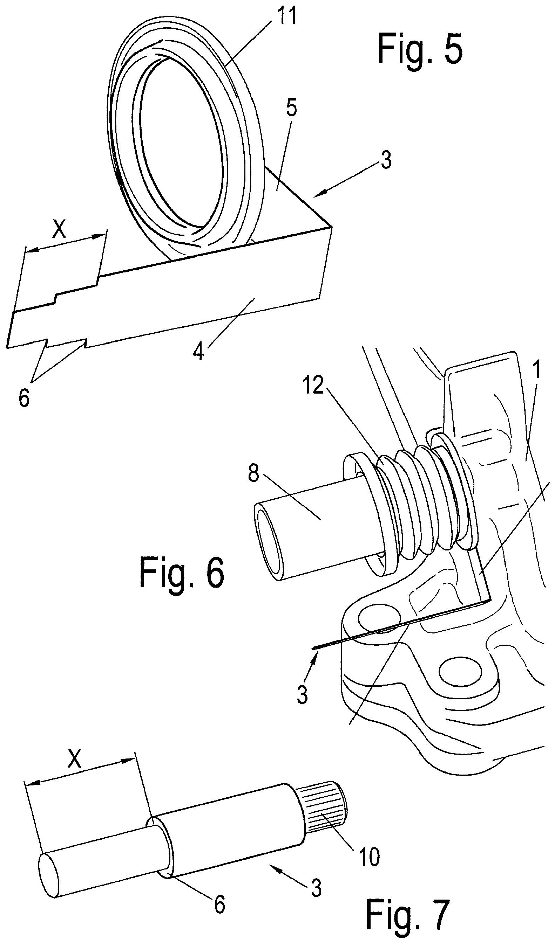

Eine vergleichbare Konstruktion stellt die Ausführungsvariante des Vergleichselementes 3 gemäß der Fig. 5 und 6 dar, wobei das Vergleichselement 3 auch hier als Blechstreifen ausgebildet ist, an dessen freiem Ende des Schenkels 4 zwei Abstufungen 6 vorgesehen sind, wobei die letzte Abstufung 6 dem maximal zulässigen Verschleißmaß X entspricht.

Der andere, abgewinkelte Schenkel 5 ist endseitig als Ring 11 ausgebildet, der zwischen einem Balg 12 (Fig. 6) und dem Bremsträger 1 eingeklemmt ist.

Die Abstufungen 6 nach den Figuren 2-6 liegen als Ausklinkungen des Schenkels 4 vor. Denkbar sind alternativ Prägungen, Kerben, Einstiche oder vergleichbare Verformungen.

Schließlich ist in der Fig. 7 als Einzelheit ein Vergleichselement 3 gezeigt, das aus einem Stift besteht, der in ein Auge des Bremsträgers 1 eingepresst ist, wozu an einem Ende ein Passstift 10 angeformt ist, mit einer Riffelung, um einen sicheren, reibschlüssigen Halt in besagtem Auge zu erreichen.

Gegenüberliegend ist die Abstufung 6 vorgesehen, die mit dem Abstand X zum Ende hin durch Durchmesserverringerung angeformt ist und die gleichfalls wahlweise als Prägung, Kerbe, Einstich oder dergleichen ausgebildet sein kann.

## Patentansprüche

1. Scheibenbremse, mit einem eine Bremsscheibe übergreifenden, an einem ortsfesten Bremsträger (1), bezogen auf die Bremsscheibe axial verschiebbar gehaltenen Bremssattel (2), in dem Bremsbeläge positioniert sind, die bei einer Bremsung mittels einer Zuspanneinrichtung gegen die Bremsscheibe pressbar sind, wobei der Bremssattel (2) zur axialen Verschiebung auf mindestens einem, mit dem Bremsträger (1) verbundenen Führungsholm (8) gelagert ist und wobei eine Einrichtung zur optischen Verschleißerkennung eines Bremsscheiben- und/oder Bremsbelagverschleißes vorgesehen ist, **dadurch gekennzeichnet, dass** zur Verschleißerkennung am Bremsträger (1) ein parallel zum Führungsholm (8) verlaufendes, sich zur Bremsscheibe entgegengesetzt erstreckendes Vergleichselement (3) befestigt ist, mit mindestens einer Abstufung (6), die in einem Abstand zum freien Ende des Vergleichselementes (3) angeordnet ist, der einem maximal zulässigen Verschleißmaß (X) entspricht.

2. Scheibenbremse nach Anspruch 1, **dadurch gekennzeichnet, dass** das Vergleichselement (3) als abgewinkelter Blechstreifen ausgebildet ist.

3. Scheibenbremse nach Anspruch 1 oder 2, **dadurch gekennzeichnet, dass** die Abstufung (6) an einem freien Ende eines Schenkels (4) vorgesehen ist und das freie Ende des anderen abgewinkelten Schenkels (5) als Öse (7) oder Ring (11) gestaltet ist.

4. Scheibenbremse nach einem der vorhergehenden Ansprüche, **dadurch gekennzeichnet, dass** das Vergleichselement (3) im Bereich seiner Öse (7) zwischen dem Führungsholm (8) und dem Bremsträger (1) eingeklemmt ist.

5. Scheibenbremse nach einem der vorhergehenden Ansprüche, **dadurch gekennzeichnet, dass** das Vergleichselement (3) mit einem angeformten Ring (11) an einem Faltenbalg (12) befestigt ist, der den Führungsholm (8) in einem zwischen dem Bremssattel (2) und dem Bremsträger (1) gebildeten Raum umhüllt.

6. Scheibenbremse nach einem der vorhergehenden Ansprüche, **dadurch gekennzeichnet, dass** das Vergleichselement (3) stiftförmig ausgebildet ist und in den Bremsträger (1) eingepresst ist.

7. Scheibenbremse nach einem der vorhergehenden Ansprüche, **dadurch gekennzeichnet, dass** die Abstufung (6) und/oder eine damit visuell korrespondierende Vergleichsfläche des Bremssattels (2) farblich gekennzeichnet sind.

8. Scheibenbremse nach einem der vorhergehenden Ansprüche, **dadurch gekennzeichnet, dass** das stiftförmige Vergleichselement (3) auf seiner der Abstufung (6) gegenüberliegenden Seite als Passstift (10) ausgebildet ist, vorzugsweise mit einer profilierten Mantelfläche.

9. Scheibenbremse nach einem der vorhergehenden Ansprüche, **dadurch gekennzeichnet, dass** das stiftförmige Vergleichselement (3) rotationssymmetrisch ist.

10. Scheibenbremse nach einem der vorhergehenden Ansprüche, **dadurch gekennzeichnet, dass** die Abstufung (6) als Ausklinkung, Prägung, Kerbe oder Einstich ausgebildet ist.

## Claims

1. Disc brake, with a brake caliper (2) that spans across a brake disc, is held on a positionally fixed brake carrier (1), and can be displaced axially relative to the brake disc, in which caliper brake linings are positioned, which during a braking operation can be pressed against the brake disc by means of an application device, wherein for its axial displacement the brake caliper (2) is mounted on at least one guiding crossbar (8) attached to the brake carrier (1), and wherein a device for the visual recognition of the wear of a brake disc and/or of brake linings is provided, **characterised in that** for the said wear recognition a comparison element (3) that extends parallel to the guiding crossbar (8) and in the opposite direction to the brake disc is attached to the brake carrier (1), the said element comprising at least one step (6) which is arranged a distance away from the free end of the comparison element (3), which distance corresponds to a maximum acceptable amount of wear (X).

2. Disc brake according to Claim 1, **characterised in that** the comparison element (3) is in the form of an angled sheet-metal strip.

3. Disc brake according to Claims 1 or 2, **characterised in that** the step (6) is formed at a free end of a limb (4) and the free end of the other, angled limb (5) is designed with an eyelet (7).

4. Disc brake according to any of the preceding claims, **characterised in that** in the area of its eyelet (7) the comparison element (3) is clamped between the guiding crossbar (8) and the brake carrier (1).

5. Disc brake according to any of the preceding claims, **characterised in that** the comparison element (3) with a ring (11) formed on it is attached to a folding bellows (12), which covers the guiding crossbar (8) in an area between the brake caliper (2) and the brake carrier (1).

6. Disc brake according to any of the preceding claims, **characterised in that** the comparison element (3) is in the form of a pin and is press-fitted into the brake carrier (1).

7. Disc brake according to any of the preceding claims, **characterised in that** the step (6) and/or a comparison surface of the brake caliper (2) that corresponds visually with it, are marked with colours.

8. Disc brake according to any of the preceding claims, **characterised in that** on its side opposite the step (6) the pin-shaped comparison element (3) is formed as an aligning pin, preferably with a profiled outer surface.

9. Disc brake according to any of the preceding claims, **characterised in that** the pin-shaped comparison element (3) is rotationally symmetrical.

10. Disc brake according to any of the preceding claims, **characterised in that** the step (6) is in the form of a shoulder, a stamped feature, a notch or a recess.

## Revendications

1. Frein à disque, comprenant un étrier (2) de frein, qui chevauche un disque de frein, qui est maintenu avec possibilité de coulissement axial sur le disque de frein, rapporté à un support (1) de frein à poste fixe, et dans lequel sont placées des garnitures de frein, qui, lors d'un freinage, peuvent être pressées sur le disque de frein au moyen d'un dispositif de serrage, dans lequel l'étrier (2) de frein est monté, pour le déplacement axial, sur au moins un longeron (8) de guidage relié au support (1) de frein, et dans lequel il est prévu un dispositif de détection visuelle d'une usure du disque de frein et/ou de la garniture de frein, **caractérisé en ce que**, pour la détection de l'usure, il est fixé sur le support (1) de frein un élément (3) de comparaison, qui s'étend parallèlement au longeron (8) de guidage, qui s'étend en sens contraire au disque de frein et qui a au moins un échelon (8), qui est disposé à une distance de l'extrémité libre de l'élément (3) de comparaison, qui correspond à la valeur (X) d'usure admissible au maximum.

2. Frein à disque suivant la revendication 1, **caractérisé en ce que** l'élément (3) de comparaison est constitué sous la forme d'une bande de tôle coudée.

3. Fein à disque suivant la revendication 1 ou 2, **caractérisé en ce que** l'échelon (6) est prévu à une extrémité libre d'une branche (4) et l'extrémité libre de l'autre branche (5) coudée est conformée en œillet (7) ou en anneau (1).

4. Frein à disque suivant l'une des revendications précédentes, **caractérisé en ce que** l'élément (3) de comparaison est serré dans la région de son œillet (7) entre le longeron (8) de guidage et le support (1) de frein.

5. Frein à disque suivant l'une des revendications précédentes, **caractérisé en ce que** l'élément (3) de comparaison est fixé par un anneau (11) venu de matière à un soufflet (12) à plis, qui enveloppe le longeron (8) de guidage dans un espace formé entre l'étrier (2) de frein et le support (1) de frein.

6. Frein à disque suivant l'une des revendications précédentes, **caractérisé en ce que** l'élément (3) de comparaison est constitué sous la forme d'une tige et est enfoncé dans le support (1) de frein.

7. Frein à disque suivant l'une des revendications précédentes, **caractérisé en ce que** l'échelon (6) et/ou une surface de comparaison y correspondant visuellement de l'étrier (2) de frein est **caractérisé par** une coloration.

8. Frein à disque suivant l'une des revendications précédentes, **caractérisé en ce que** l'élément (3) de comparaison en forme de tige est constitué, sur son côté opposé à l'échelon (6), sous la forme d'un goujon (10) d'assemblage ayant, de préférence, une surface latérale profilée.

9. Frein à disque suivant l'une des revendications précédentes, **caractérisé en ce que** l'élément (3) de comparaison en forme de tige est de révolution.

10. Frein à disque suivant l'une des revendications précédentes, **caractérisé en ce que** l'échelon (6) est constitué sous la forme d'une encoche, d'une empreinte, d'une rainure ou d'une entaille.
